# EUROPEAN PATENT SPECIFICATION

(11) **EP 1 651 032 B1**
(45) Date of publication and mention of the grant of the patent: **20.02.2008**
(21) Application number: 04754864.9
(22) Date of filing: 10.06.2004
(51) Int. Cl.: A01K 91/04

(54) **APPARATUS AND METHOD FOR FISHING LINE SPLICING**
APPARAT UND VERFAHREN ZUM SPLEISSEN EINER ANGELSCHNUR
DISPOSITIF ET PROCEDE POUR EPISSURAGE DE LIGNE DE PECHE

(30) Priority: 28.07.2003 US 628219
(43) Date of publication of application: 03.05.2006
(73) Proprietor: 3M Innovative Properties Company, St. Paul, MN 55133-3427 (US)
(72) Inventor: BLETTE, Russell E., Saint Paul, MN 55133-3427 (US); STARK, John E., Saint Paul, MN 55133-3427 (US); WIERINGA, Jeffrey L., Saint Paul, MN 55133-3427 (US)
(74) Representative: Vossius & Partner
(86) International application number: PCT/US2004/018394
(87) International publication number: WO 2005/015991

(56) References cited:
- WO-A-97/05775
- FR-A- 2 549 184
- FR-A- 2 703 879
- US-A- 4 194 273

## Description

### BACKGROUND OF THE INVENTION

This invention relates in general to a device and method for linearly connecting strand materials and more particularly to a device which facilitates the connection of fishing lines.

In many types of fishing, and particularly in fly fishing, it is necessary or desirable to linearly connect sections of fishing line, either because of different properties of the sections or to repair a break. A fly fisherman must be equipped with a fishing rod, a fishing line called a fly line, a device such as a reel to hold the fly line, a leader line commonly called a leader, and flies. A leader is a relatively short, fine, tapered segment of monofilament line, with its larger or butt end attached to the fly line and its smaller or terminal end to the fly.

Fly fishing involves casting a line a substantial distance over a body of water wherein only the weight of the line is used to effect the cast. A skilled fly caster typically uses a tapered line and a tapered leader at the end of this line. One of the more difficult aspects of fly fishing involves connecting the end of the leader to the end of the fishing line by tying a knot. The knot must be specially selected to avoid kinks and/or slip-separation of the leader from the line.

Typically, a leader will range from as short as 5 or 6 feet (1.5 to 1.8 mm) to as long as 12 to 15 feet (3.7 to 4.6 mm). Some leaders possess a true taper, that is, they undergo a gradual change in diameter from the butt end to the terminal end without any interruptions in the leader material. Other leaders consist of lengths of varying diameter leader material tied together. Many fishermen favor the latter, that is the knotted leader, in that it enables them to tailor the leader to their own needs. But irrespective of whether the fisherman uses a truly tapered leader or a knotted leader, the fisherman will usually find it necessary to replace the end section or segment of the leader, often called the tippet, for this is where the leader is thinnest and weakest, and where it will break if its capacity is exceeded. Tippet replacement and repair usually require a fisherman to form a knot. Moreover, when a fisherman changes to a smaller fly, a thinner tippet is often required. Hence, the typical fisherman must tie knots from time to time in leader material, which is usually monofilament line.

The knots which join the lengths of leader material either to the fly line or to other leader sections must accommodate the varying diameters of material and must be strong. Nail knots and Albright knots meet these requirement, but are time consuming to tie and require skill, good eyesight and considerable manual dexterity. Moreover, the knot is usually the weakest part of the fish line and may cause the breaking of the fish line at the knot Thus, there remains a need for a quick and easy device and method for strong linear connection of fishing lines.

FR-A-2 703 879 discloses an instantaneous universal coupling device including two elements, characterized by an anchor and a tubular shell which can be mutually assembled or disassembled by pressing and releasing, at least one of these elements being temporarily elastically deformable so that, in action of pressing, the anchor penetrates into the shell and, under the action of releasing, is trapped in the shell.

FR-A-2 549 184 discloses a swivel hook formed by a stirrup-piece and of a shanked ring, wherein the shanked ring is removable and for this purpose, the shank has a head made from an elastic plastic of suitable shape to be attached directly or indirectly to the stirrup-piece.

In WO97/05775, a leader or line used for fishing is disclosed, the line having a threaded portion on one end for attachment to a threaded connector attached to a separate line or to a terminal fixture of intermediate fixture in a modular manner.

### BRIEF SUMMARY OF THE INVENTION

A splice system and method for linear connection of fishing lines according to claims 1 and 13 include a female connector and a male connector. The female connector has an outer surface, first and second opposite ends, and a longitudinal axis. The outer surface has an aperture disposed thereon. The first end is connected to a first fishing line section and the second end has an opening therein. The connector has a coaxial interior feature with a radial extent. The male connector has first and second opposite ends and a longitudinal axis. The second end is connected to a second fishing line section and the first end is configured for coaxial insertion into the opening of the female connector. The second end has a radial extent greater than the radial extent of the interior feature of the female connector. At least one of the connectors is resilient so that the second end of the male connector compresses or the interior feature of the female connector expands to allow passage of the second end of the male connector axially past the interior feature. Preferred embodiments of the invention are set out in the dependent claims.

### BRIEF DESCRIPTION OF THE DRAWINGS

FIG. 1 is top plan view of one embodiment of the splice system of the present invention.
FIG. 2 is a side cross-sectional view along line 2-2 of FIG. 1, showing the connectors of the splice system in a connected configuration.
FIG. 3 is a side cross-sectional view of another embodiment of a connector of the splice system.
FIG. 4 is a side cross-sectional view of yet another embodiment of a connector of the splice system.
FIG. 5 is a side elevation view of a card holding multiple female connectors.

While the above-identified drawing figures set forth preferred embodiments of the invention, other embodiments are also contemplated, as noted in the discussion. In all cases, this disclosure presents the invention by way of representation and not limitation. It should be understood that numerous other modifications and embodiments can be devised by those skilled in the art which fall within the scope of the principals of this invention. The figures may not be drawn to scale. Like reference numbers have been used throughout the figures to denote like parts.

### DETAILED DESCRIPTION

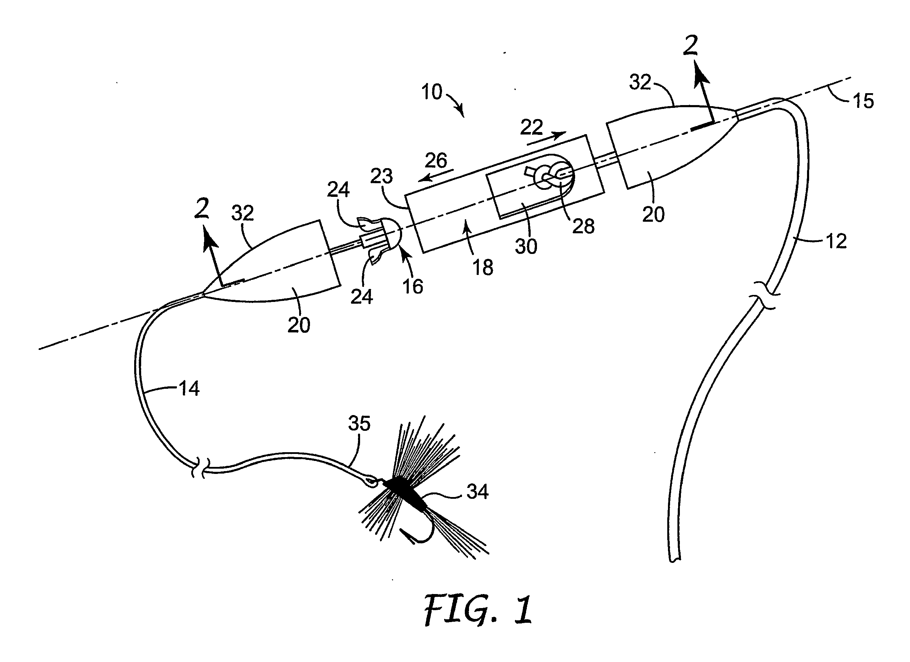

FIG. 1 is perspective view of one embodiment of the splice system of the present invention. Splice system 10 connects fly or fishing line 12 and leader 14 or other fishing line segments which are aligned generally along longitudinal axis 15 for connection. Splice system 10 includes two main components: male connector or bullet connector 16 and female connector or receiver 18. An exemplary embodiment additionally includes slidably mounted floats 20.

In an exemplary embodiment, bullet connector 16 is secured to leader 14 and receiver 18 is secured to fly line 12. In an exemplary embodiment, leader 14 is permanently secured to bullet connector 16. Attachment of leader 14 to bullet connector 16 can be accomplished during manufacturing or can occur after each component has been produced. Suitable attachment methods include molding of leader 14 and bullet connector 16 as an integral unit or joining leader 14 and bullet connector 16 with a suitable adhesive, for example. In an exemplary embodiment, fly line 12 is removably secured to reusable receiver 18 by knot 28.

FIG. 1 illustrates bullet connector 16 prior to its connection to receiver 18. Bullet connector 16 moves in advance direction 22 for insertion into first opening 23 of receiver 18. When bullet connector 16 is inserted into receiver 18, radially extending petals 24 engage with an interior feature of receiver 18 to prevent disengagement of bullet connector from receiver 18 in reverse direction 26. Thus, bullet connector 16 is a "one-way" connector that can only be removed from receiver 18 in advance direction 22. Aperture 30 is provided on a surface of receiver 18. To disconnect bullet connector 16 and receiver 18, a user advances bullet connector 16 in direction 22 out of receiver 18 through aperture 30. The user can then cut leader 14 to remove bullet connector 16 and leader 14 from receiver 18. The user can then insert another leader 14 with bullet connector 16 into first opening 23 of receiver 18 to connect leader 14 and fly line 12. In use, tensile forces on the assembly in opposite directions 22 and 26 prevent unintentional disengagement of bullet connector 16 and receiver 18.

When bullet connector 16 and receiver 18 are fully connected, thereby connecting leader 14 to fly line 12, a fisherman can cast fly line 12 and leader 14 over the water to place fly 34, attached to end 3 5 of leader 14, into the body of water. In an exemplary embodiment, a connected system 10 of bullet connector 16 and receiver 18 is less than about 1.0 inch (25.4 mm) long and less than about 0.140 inch (3.56 mm) in diameter. In some embodiments, fly line 12 is about 0.032 inch (0.81 mm) to about 0.042 inch (1.07 mm) in diameter. In some embodiments, leader 14 is about 0.020 inch (0.51 mm) to about 0.026 inch (0.66 mm) in diameter. Splice system 10, with its low profile, small size, light weight, elongated shape and circular cross section is advantageous over other connection methods in that it is easy to use, very small, lightweight, and aero- and hydrodynamic. The shape and size allow a fly line 12 and leader 14 connected by splice system 10 to glide easily through air and water without disrupting the flow of the fishing line in casting. In an exemplary embodiment, bullet connector 16 and receiver 18 are each molded from a lightweight, resilient and durable material such as plastic or nylon. Nylon 66, available from E.I. Du Pont de Nemours and Co., Inc., Wilmington, Delaware, is used in one suitable embodiment.

In one embodiment, floats 20 can be used with splice system 10 to provide buoyancy to the connection. In another embodiment, buoyancy is incorporated into bullet connector 16 and/or receiver 18 by using buoyant materials or adding buoyant features such as dispersed hollow glass beads in the bulk material. In one embodiment, each float 20 is formed of a closed-cell or open-cell foam and can be configured as a tapered cylinder having axial bore through which either fly line 12 or leader 14 can pass to secure float 20. In one exemplary embodiment, float 20 is formed of open-cell foam having a specific gravity of at least about 0.5. In one exemplary embodiment, float 20 is formed of extruded open-cell foam having a specific gravity of less than about 0.6. Floats 20, when brightly colored, are functional as strike indicators because they visibly signal movement of leader 14 and fly 34 during a fish strike.

In some applications, floats 20 are not used because a sinking line is preferred. In that case, sinking ingredients such as tungsten powder can be incorporated into bullet connector 16 and/or receiver 18, or a sinking member may be used in place of floats 20. Moreover, the sinking member or float 20 may be colored to render it highly visible by day or night or camouflaged, as desired. Other treatments for the components of splice system 10 include protection against ultraviolet light. In one embodiment, each float 20 is radially symmetrically disposed and includes tapered surface 32 to enhance the movement of splice system 10 through air and water. Tapered surface 32 is symmetric about axis 15 and extends from a narrow diameter near distal end 33 to a greater diameter toward bullet connector 16 or receiver 18, respectively.

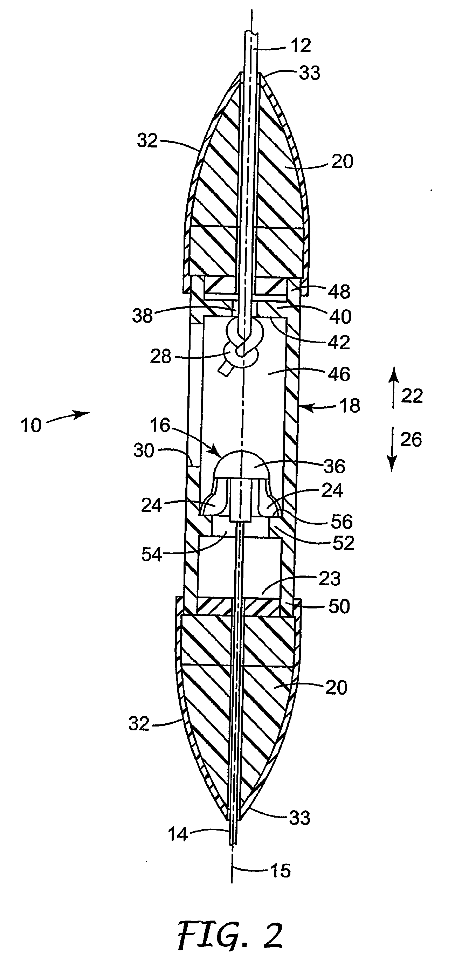

FIG. 2 is a side cross-sectional view along line 2-2 of FIG. 1, showing the connectors of the splice system in a connected configuration. Bullet connector 16 includes head 36 and a plurality of resiliently deformable petals 24, the plurality of petals 24 having a radial extent greater than the radial extent of head 36. Bullet connector 16 is shaped to facilitate its advance in direction 22 through axial bore 38 of receiver 18 and, once fully inserted into receiver 18, to prevent its motion in direction 26 through bore 38. In an exemplary embodiment, head 36 has a hemispherical shape and each petal 24 has a narrow width at head 36 and gradually widens in a direction away from head 36. In the illustrated embodiment, leader 14 is integrally formed with bullet connector 16. This can be accomplished, for example, by molding bullet connector 16 over or with leader 14 so that they form an inseparable unit.

In one embodiment, receiver 18 includes interior annulus 40 having axial bore 38 therethrough and defining radially extending shoulder 42. Axial bore 38 is wide enough to allow the passage of fly line 12 but not wide enough to allow the passage of knot 28 formed at the end of fly line 12. Cavity 46 is wide enough to accommodate knot 28 and deep enough to accommodate knot 28 and bullet connector 16 while allowing space for bullet connector 16 to exit aperture 30.

To attach fly line 12 to receiver 18, a user threads fly line 12 from first end 48 of receiver 18 toward second end 50. The user then ties knot 28 in fly line 12. If excess fly line 12 extends beyond knot 28, the user can trim off the extra length if desired. The user then pulls fly line 12 back in the direction of first end 48 to seat knot 28 against shoulder 42. With fly line 12 thereby connected to receiver 18 and leader 14 connected to bullet connector 16, fly line 12 and leader 14 can be connected to each other by moving bullet connector 16 along axis 15 into cavity 46 of receiver 18. A permanent snap connection is facilitated by the radial expansion of petals 24 of bullet connector 16 after they have passed over an interior feature such as raised annulus 52 on the interior surface of receiver 18.

In one exemplary embodiment, as bullet connector 16 is advanced from second end 50 of receiver 18 past interior annulus 52, the hemispheroidal shape of head 36 bullet connector 16 facilitates its movement through bore 54. According to the invention, a radial extent, such as half of an outer diameter, of petals 24 (in an uncompressed state) is greater than a radial extent, such as half of an inner diameter, of annulus 52. As the bullet connector 16 is advanced past the annulus 52, the petals 24 are resiliently radially inwardly compressed to fit through the annulus 52. When petals 24 have passed annulus 52, an audible snap or click is heard, and a tactile click is also felt, as petals 24 of bullet connector 16 resiliently return to their uncompressed dimension. In particularly suitable embodiments, either one or both of bullet connector 26 and radial annulus 52 resiliently deform to allow petals 24 to move past annulus 52 and then return to about the original dimension. Such resilient deformation can be accomplished by the choice of materials and the geometry of bullet connector 16 and receiver 18. The shape of head 36 can take other forms, such as a tapered cone shape, for example. The shape of petals 24 can similarly take other forms, such as radial ribs, stems, and detents, for example.

In an exemplary embodiment, annulus 52 has a flat surface 56 which projects radially inward and faces free ends of petals 24 to prevent petals 24 from slipping back past annulus 52. According to the invention, an outer diameter of bullet connector 16 at petals 24 is slightly larger than an inner diameter of cavity 46 to facilitate an interference fit of bullet connector 16 in receiver 18, thereby leading to an even more secure connection. In a particularly suitable embodiment, flat surface 56 is slightly undercut (i.e., moving radially outward from axis 15, flat surface 65 slopes toward second end 50) so that annulus 52 forms an annular barb which further prevents the disconnection of bullet connector 16 and receiver 18. In an exemplary embodiment, head 36 has a largest diameter of about 0.068 inch (1.72 mm); bullet connector 16 at petals 24 has a largest diameter of about 0.093 inch (2.36 mm); bore 54 has an inner diameter of about 0.068 inch (1.72 mm); and cavity 46 has an inner diameter of about 0.099 inch (2.51 mm). In each case, a radial extent is half of a diameter.

Because the outer diameter of petals 24 is greater than the inner diameter of annulus 52, the passage of petals 24 into cavity 46 forms a permanent and strong connection between bullet connector 16 and receiver 18, thereby connecting leader 14 and fly line 12. In an exemplary embodiment, the materials and dimensions of bullet connector 16 and receiver 18 are chosen so that bullet connector 16 and receiver 18 cannot be separated with manual tensile or separation force along axis 15 of at least about 8 pounds (3.6 kg). In an especially suitable embodiment, bullet connector 16 and receiver 18 cannot be separated with tensile or separation force along axis 15 of at least about 10 pounds (4.5 kg). Nylon is an especially suitable material for bullet connector 16 and receiver 18 because it swells slightly in water, leading to an even stronger interference connection between bullet connector 16 and receiver 18.

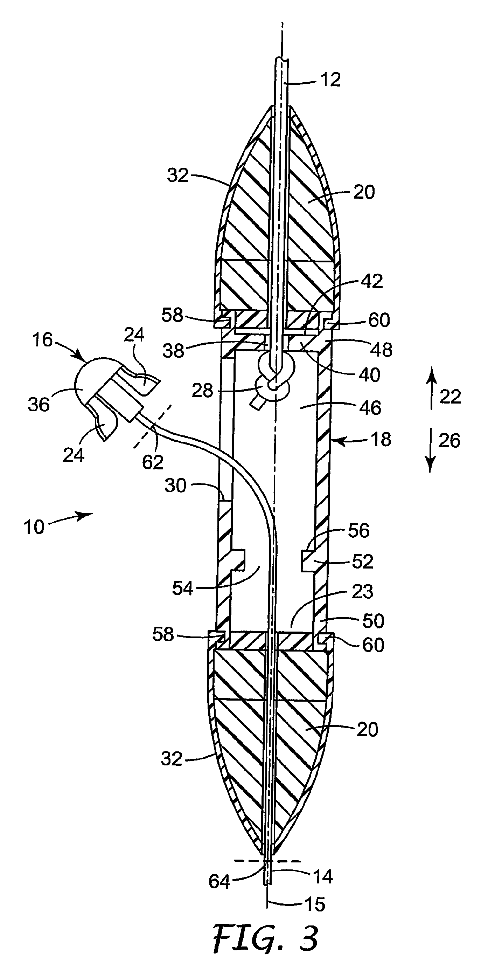

FIG. 3 is a side cross-sectional view of another embodiment of a connector of the splice system. In the illustrated embodiment, receiver 18 includes annular grooves 58 on an exterior surface at each of first end 48 and second end 50. Grooves 58 are configured to mate with raised annuli 60 on floats 20 for secure connection of floats 20 onto first end 48 and second end 50 of receiver 16.

To initially use splice system 10, a user obtains leader 14 with attached bullet connector 16. A user attaches fly line 12 to receiver 18 as discussed above. The user attaches leader 14 to fly line 12 by inserting bullet connector 16 into receiver 18 to form a permanent, locked connection.

To replace leader 14 with a different leader 14, the user removes the old leader 14 by moving bullet connector 16 in advance direction 22 out of aperture 30 of receiver 16. While interference of petals 24 and annulus 52 prevents movement in direction 26, movement of bullet connector 16 from receiver 18 in direction 22 is allowed. Leader 14 can be cut at severance point 62 near bullet connector 16 or severance point 64 near float 20. If cut at point 62, leader 14 is removed by pulling leader 14 in direction 26. If cut at point 64, leader 14 is removed from receiver 18 by pulling bullet connector 16 in direction 22 out aperture 30. The severed portions of leader 14 can be discarded along with bullet connector 16.

A new leader 14 connected to new bullet connector 16 is obtained. Float 20 is removed from end 50 of receiver 18. Distal end 35 (see FIG. 1) of leader 14 is threaded through float 20 so that bullet connector 16 is proximate the end of float 20 which connects to receiver 18. Bullet connector 16 is moved axially through bore 54 so that petals 24 pass radial annulus 52, resulting in the connected position of bullet connector 16 and receiver 18 shown in FIG. 2. Float 20 is thereafter reattached to receiver 20. Thus, a fisher may be supplied with multiple sets of leaders 14, each with an attached bullet connector 16, but requires only one fly line 12 with attached receiver 18.

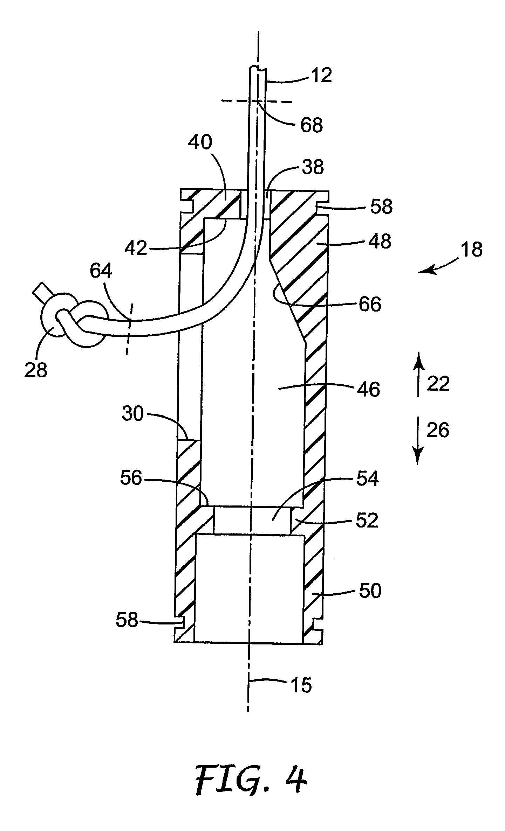

FIG. 4 is a side cross-sectional view of yet another embodiment of receiver 18 of splice system 10. Receiver 18 further includes internal ramp surface 66 to aid in diverting bullet connector 16 out of aperture 30. As discussed above, receiver 18 is reusable and thus does not need to be replaced to change leader 14. However, if receiver 18 is damaged or otherwise requires replacement or repositioning on fly line 12, it can also be easily replaced or repositioned. A user moves knot 28 of fly line 12 in direction 26 out aperture 30 of receiver 18. Fly line 12 can be cut at severance point 64 near knot 28 or severance point 68. If cut at point 64, fly line 12 is removed from receiver 18 by pulling fly line 12 in direction 22. If cut at point 68, fly line 12 is removed from receiver 18 by pulling knot 28 in direction 26 out of aperture 30. The severed end of fly line 12 can be discarded along with receiver 18. The newly cut end of fly line 12 can be inserted into a new receiver 18 and knot 28 tied as discussed above.

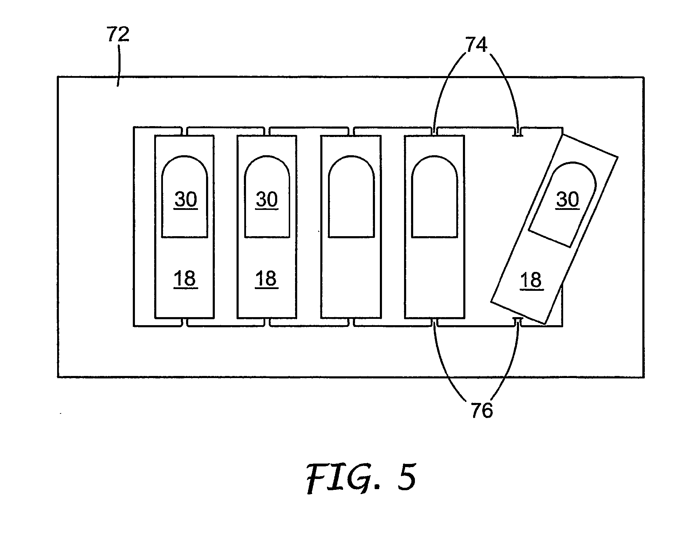

FIG. 5 is a side elevation view of a card 72 holding multiple receivers 18. Card 72 provides for convenient storage of, and easy accessability to, receivers 18. Card 72 is easily stored in a user's vest pocket, providing a convenient storage unit for receivers 18, which might otherwise be easily lost because of their small size. An added convenience is that a user can thread fly line 12 through receiver 18 and tie knot 28 while the receiver 18 is held on card 72, thus reducing the risk of dropping and losing the receiver 18 while tying on fly line 12. In one embodiment, receivers 18 are integrally molded with card 72, leaving connecting members 74 and 76 at first end 48 and second end 50 of each receiver 18, respectively.

FIG. 5 also illustrates the process of removal of one receiver 18 from card 72. In one embodiment, each connecting member 74 and 76 secures the respective receiver 18 to card 72 during routine handling, but is easily broken with manual force for the removal of a receiver 18 from card 72.

Although the present invention has been described with reference to preferred embodiments, workers skilled in the art will recognize that changes may be made in form and detail without departing from the scope of the invention, as defined in the appended claims.

## Claims

1. A splice system (10) for linear connection of fishing lines (12, 14), the system (10) comprising:
a female connector (18) having an outer surface, first (48) and second (50) opposite ends, and a longitudinal axis (15), the outer surface having an aperture (30) disposed thereon, the first end (48) connected to a first fishing line section (12) and the second end (50) having a co-axial opening (23) therein, the connector (18) having a co-axial interior feature (52) with a radial extent; and
a male connector (16) having first and second opposite ends and a longitudinal axis (15), the second end connected to a second fishing line section (14) and the first end configured for coaxial insertion into the opening (23) of the female connector (18), the second end comprising a plurality of resilient petals (24) having a radial extent greater than the radial extent of the interior feature (52) of the female connector (18);
**characterised in that** the resilient petals (24) of the male connector (16) deform to allow passage of the second end of the male connector (16) axially past the interior feature (52).

2. The splice system (10) of claim 1 wherein the female connector (18) is removably connected to the first fishing line section (12).

3. The splice system (10) of claim 2 further comprising:
an axial bore (38) in the first end (48) of the female connector (18) having a diameter greater than a diameter of an end of the first fishing line section (12) and less than a diameter of a knot (28) formed at the end of the first fishing line (12).

4. The splice system (10) of claim 1 wherein the male connector (16) has a head (3 6) at the first end and the plurality of petals (24) at the second end.

5. The splice system (10) of claim 1 further comprising a ramp (66) disposed on an interior surface of the female connector (18).

6. The splice system (10) of claim 1 wherein the interior feature (52) is a raised interior annulus (52).

7. The splice system (10) of claim 6 further comprising a radially extending flat surface (56) disposed on the raised interior annulus (52), the flat surface (56) facing the first end (48) of the female connector (18).

8. The splice system (10) of claim 1 wherein the male connector (16) is permanently connected to the second fishing line (14).

9. The splice system (10) of claim 1 further comprising a float (20) disposed on a fishing line section (12, 14).

10. The splice system (10) of claim 9 in which the float (20) is radially symmetric.

11. The splice system (10) of claim 10 in which the float (20) is tapered.

12. The splice system (10) of claim 9 further comprising a groove (58) disposed on the outer surface of the female connector (18) and an annulus (60) disposed on the float (20) configured to mate with the groove (58).

13. A method for linear connection of fishing lines (12, 14) comprising:
providing a female connector (18) having first (48) and second (50) opposite ends and a longitudinal axis (15), the first end (48) connected to a first fishing line section (12) and the second end (50) having an opening therein, the connector (18) having a co-axial interior feature (52) with a radial extent;
providing a male connector (16) having first and second opposite ends and a longitudinal axis (15), the second end connected to a second fishing line section (14) and the first end configured for coaxial insertion into the opening of the female connector (18), the second end comprising a plurality of resilient petals (24) having a radial extent greater than the radial extent of the female connector (18);
inserting the male connector (16) into the opening of the female connector (18); and
moving the resilient petals (24) of the second end of the male connector (16) axially past the interior feature (52) of the female connector (18) such that the resilient petals (24) deform radially inwardly while moving axially past the interior feature.

14. The method of claim 13 in which the step of providing a first fishing line section (12) connected to a female connector (18) includes passing an end of the first fishing line (12) through an axial bore (3 8) in the female connector (18) and knotting the end of the first fishing line (12).

15. The method of claim 14 further comprising:
providing a plurality of the female connectors (18) on a card (72); and
separating one of the female connectors (18) from the card (72) after knotting the end of the first fishing line (12).

16. The method of claim 14 further comprising:
providing a float (20) having an axial bore; and
passing the end of the first fishing line (12) through the bore of the float (20) prior to passing the end of the first fishing line (12) through the bore (38) of the female connector (18).

17. The method of claim 13, further comprising:
moving the male connector (16) through the aperture (30) to separate the male connector (16) from the female connector (18);
cutting the second fishing line (14) and discarding the second fishing (14) line and the male connector (16);
providing a second male connector (16) having first and second opposite ends and a longitudinal axis (15), the second end connected to a third fishing line section (14) and the first end configured for coaxial insertion into the opening of the female connector (18), the second end of the male connector (16) having a radial extent greater than a radial extent of an interior feature (52) of the female connector (18);
inserting the second male connector (16) into the opening of the female connector (18); and
moving the radial extent of the second end of the male connector (16) axiallypast the interior feature (52) of the female connector (18).

## Patentansprüche

1. Spleißsystem (10) zur linearen Verbindung von Angelschnuren (12, 14), wobei das System (10) aufweist:
ein weibliches Verbindungsstück (18) mit einer Außenfläche, ersten (48) und zweiten (50) gegenüberliegenden Enden und einer Längsachse (15), wobei die Außenfläche einen Durchlass (30) hat, der darauf angeordnet ist, wobei das erste Ende (48) mit einem ersten Angelschnurabschnitt (12) verbunden ist und das zweite Ende (50) darin eine koaxiale Öffnung (23) aufweist, wobei das Verbindungsstück (18) ein koaxiales Innenmerkmal (52) mit einer radialen Ausdehnung hat; und
ein männliches Verbindungsstück (16) mit ersten und zweiten gegenüberliegenden Enden und einer Längsachse (15), wobei das zweite Ende mit einem zweiten Angelschnurabschnitt (14) verbunden ist und das erste Ende zum koaxialen Einfügen in die Öffnung (23) des weiblichen Verbindungsstücks (18) gestaltet ist, wobei das zweite Ende mehrere nachgiebige Kronenblätter (24) mit einer radialen Ausdehnung, die größer als die radiale Ausdehnung des Innenmerkmals (52) des weiblichen Verbindungsstücks (18) ist, aufweist,
**dadurch gekennzeichnet, dass** sich die nachgiebigen Kronenblätter (24) des männlichen Verbindungsstücks (16) verformen, um den Durchgang des zweiten Endes des männlichen Verbindungsstücks (16) axial an dem Innenmerkmal (52) vorbei zu ermöglichen.

2. Spleißsystem (10) nach Anspruch 1, wobei das weibliche Verbindungsstück (18) beweglich mit dem ersten Angelschnurabschnitt (12) verbunden ist.

3. Spleißsystem (10) nach Anspruch 2, ferner aufweisend:
eine axiale Bohrung (38) im ersten Ende (48) des weiblichen Verbindungsstücks (18) mit einem Durchmesser, der größer als ein Durchmesser von einem Ende des ersten Angelschnurabschnitts (12) und kleiner als ein Durchmesser eines Knotens (28) ist, welcher am Ende der ersten Angelschnur (12) gebildet wird.

4. Spleißsystem (10) nach Anspruch 1, wobei das männliche Verbindungsstück (16) einen Kopf (36) am ersten Ende und die mehreren Kronenblätter (24) am zweiten Ende aufweist.

5. Spleißsystem (10) nach Anspruch 1, ferner aufweisend eine Rampe (66), die auf einer Innenfläche des weiblichen Verbindungsstücks (18) angeordnet ist.

6. Spleißsystem (10) nach Anspruch 1, wobei das Innenmerkmal (52) ein angehobener Innenkranz (52) ist.

7. Spleißsystem (10) nach Anspruch 6, ferner aufweisend eine sich radial erstreckende glatte Fläche (56), die auf dem angehobenen Innenkranz (52) angeordnet ist, wobei die glatte Fläche (56) dem ersten Ende (48) des weiblichen Verbindungsstücks (18) gegenüberliegt.

8. Spleißsystem (10) nach Anspruch 1, wobei das männliche Verbindungsstück (16) ständig mit der zweiten Angelschnur (14) verbunden ist.

9. Spleißsystem (10) nach Anspruch 1, ferner aufweisend einen Schwimmkörper (20), der auf einem Angelschnurabschnitt (12, 14) angeordnet ist.

10. Spleißsystem (10) nach Anspruch 9, bei dem der Schwimmkörper (20) radial-symmetrisch ist.

11. Spleißsystem (10) nach Anspruch 10, bei dem der Schwimmkörper (20) kegelförmig ist.

12. Spleißsystem (10) nach Anspruch 9, ferner aufweisend eine Rille (58), die auf der Außenfläche des weiblichen Verbindungsstücks (18) angeordnet ist, und einen Kranz (60), der auf dem Schwimmkörper (20) angeordnet ist, welcher zum Ineinandergreifen mit der Rille (58) gestaltet ist.

13. Verfahren zur linearen Verbindung von Angelschnuren (12, 14), aufweisend:
Bereitstellen eines weiblichen Verbindungsstücks (18) mit ersten (48) und zweiten (50) gegenüberliegenden Enden und einer Längsachse (15), wobei das erste Ende (48) mit einem ersten Angelschnurabschnitt (12) verbunden ist, und das zweite Ende (50) darin eine Öffnung aufweist, wobei das Verbindungsstück (18) ein koaxiales Innenmerkmal (52) mit einer radialen Ausdehnung hat;
Bereitstellen eines männlichen Verbindungsstücks (16) mit ersten und zweiten gegenüberliegenden Enden und einer Längsachse (15), wobei das zweite Ende mit einem zweiten Angelschnurabschnitt (14) verbunden ist und das erste Ende zum koaxialen Einfügen in die Öffnung des weiblichen Verbindungsstücks (18) gestaltet ist, wobei das zweite Ende mehrere nachgiebige Kronenblätter (24) mit einer radialen Ausdehnung, die größer als die radiale Ausdehnung des weiblichen Verbindungsstücks (18) ist, aufweist;
Einfügen des männlichen Verbindungsstücks (16) in die Öffnung des weiblichen Verbindungsstücks (18); und
Bewegen der nachgiebigen Kronenblätter (24) des zweiten Endes des männlichen Verbindungsstücks (16) axial an dem Innenmerkmal (52) des weiblichen Verbindungsstücks (18) vorbei in einer Weise, dass sich die nachgiebigen Kronenblätter (24) radial nach innen verformen, während sie sich axial an dem Innenmerkmal vorbei bewegen.

14. Verfahren nach Anspruch 13, bei dem der Schritt des Bereitstellens eines ersten Angelschnurabschnitts (12), welcher mit einem weiblichen Verbindungsstück (18) verbunden ist, das Durchgehen eines Endes der ersten Angelschnur (12) durch eine axiale Bohrung (38) im weiblichen Verbindungsstück (18) und das Knoten des Endes der ersten Angelschnur (12) aufweist.

15. Verfahren nach Anspruch 14, ferner aufweisend:
Bereitstellen mehrerer weiblicher Verbindungsstücke (18) auf einer Karte (72); und Trennen eines der weiblichen Verbindungsstücke (18) von der Karte (72) nach dem Knoten des Endes der ersten Angelschnur (12).

16. Verfahren nach Anspruch 14, ferner aufweisend:
Bereitstellen eines Schwimmkörpers (20), der eine axiale Bohrung aufweist; und
Durchgehen des Endes der ersten Angelschnur (12) durch die Bohrung des Schwimmkörpers (20) vor dem Durchgehen des Endes der ersten Angelschnur (12) durch die Bohrung (38) des weiblichen Verbindungsstücks (18).

17. Verfahren nach Anspruch 13, ferner aufweisend:
Bewegen des männlichen Verbindungsstücks (16) durch den Durchlass (30), um das männliche Verbindungsstück (16) von dem weiblichen Verbindungsstück (18) zu trennen;
Abschneiden der zweiten Angelschnur (14) und Verwerfen der zweiten Angelschnur (14) und des männlichen Verbindungsstücks (16);
Bereitstellen eines zweiten männlichen Verbindungsstücks (16) mit ersten und zweiten gegenüberliegenden Enden und einer Längsachse (15), wobei das zweite Ende mit einem dritten Angelschnurabschnitt (14) verbunden ist und das erste Ende zum koaxialen Einfügen in die Öffnung des weiblichen Verbindungsstücks (18) gestaltet ist, wobei das zweite Ende des männlichen Verbindungsstücks (16) eine radiale Ausdehnung, die größer als eine radiale Ausdehnung eines Innenmerkmals (52) des weiblichen Verbindungsstücks (18) ist, aufweist;
Einfügen des zweiten männlichen Verbindungsstücks (16) in die Öffnung des weiblichen Verbindungsstücks (18); und
Bewegen der radialen Ausdehnung des zweiten Endes des männlichen Verbindungsstücks (16) axial an dem Innenmerkmal (52) des weiblichen verbindungsstücks (18) vorbei.

## Revendications

1. Système d'épissurage (10) pour former une connexion linéaire de lignes de pêche (12, 14), le système (10) comprenant:
un connecteur femelle (18) présentant une surface extérieure, des première (48) et deuxième (50) extrémités opposées, et un axe longitudinal (15), la surface extérieure comportant une ouverture (30) formée dans celle-ci, la première extrémité (48) étant connectée à une première section de ligne de pêche (12), et la deuxième extrémité (50) comportant une ouverture coaxiale (23), le connecteur (18) comprenant une caractéristique intérieure coaxiale (52) présentant une étendue radiale; et
un connecteur mâle (16) présentant des première et deuxième extrémités opposées et un axe longitudinal (15), la deuxième extrémité étant connectée à une deuxième section de ligne de pêche (14), et la première extrémité étant configurée pour être insérée coaxialement dans l'ouverture (23) du connecteur femelle (18), la deuxième extrémité comprenant une pluralité de pétales élastiques (24) dont l'étendue radiale est supérieure à l'étendue radiale de la caractéristique intérieure (52) du connecteur femelle (18) ;
**caractérisé en ce que** les pétales élastiques (24) du connecteur mâle (16) se déforment pour permettre le passage de la deuxième extrémité du connecteur mâle (16) axialement au-delà de la caractéristique intérieure (52).

2. Système d'épissurage (10) selon la revendication 1, dans lequel le connecteur femelle (18) est connecté de façon détachable à la première section de ligne de pêche (12).

3. Système d'épissurage (10) selon la revendication 2, comprenant en outre un alésage axial (38) dans la première extrémité (48) du connecteur femelle (18) dont le diamètre est supérieur au diamètre d'une extrémité de la première section de ligne de pêche (12) et inférieur au diamètre d'un noeud (28) formé à l'extrémité de la première ligne de pêche (12).

4. Système d'épissurage (10) selon la revendication 1, dans lequel le connecteur mâle (16) comprend une tête (36) à la première extrémité et la pluralité de pétales (24) à la deuxième extrémité.

5. Système d'épissurage (10) selon la revendication 1, comprenant en outre une rampe (66) disposée sur une surface intérieure du connecteur femelle (18).

6. Système d'épissurage (10) selon la revendication 1, dans lequel la caractéristique intérieure (52) est un anneau intérieur saillant (52).

7. Système d'épissurage (10) selon la revendication 6, comprenant en outre une surface plate s'étendant radialement (56) disposée sur l'anneau intérieur saillant (52), la surface plate (56) faisant face à la première extrémité (48) du connecteur femelle (18).

8. Système d'épissurage (10), selon la revendication 1, dans lequel le connecteur mâle (16) est connecté de façon permanente à la deuxième ligne de pêche (14).

9. Système d'épissurage (10) selon la revendication 1, comprenant en outre un flotteur (20) disposé sur une section de ligne de pêche (12, 14).

10. Système d'épissurage (10) selon la revendication 9, dans lequel le flotteur (20) est radialement symétrique.

11. Système d'épissurage (10) selon la revendication 10, dans lequel le flotteur (20) est conique.

12. Système d'épissurage (10) selon la revendication 9, comprenant une rainure (58) formée sur la surface extérieure du connecteur femelle (18) et un anneau (60) disposé sur le flotteur (20) configuré pour correspondre à la rainure (58).

13. Procédé de connexion linéaire de lignes de pêche (12, 14), comprenant les étapes consistant à:
installer un connecteur femelle (18) présentant des première (48) et deuxième (50) extrémités opposées et un axe longitudinal (15), la première extrémité (48) étant connectée à une première section de ligne de pêche (12), et la deuxième extrémité (50) comportant une ouverture, le connecteur (18) comprenant une caractéristique intérieure coaxiale (52) présentant une étendue radiale;
installer un connecteur mâle (16) présentant des première et deuxième extrémités opposées et un axe longitudinal (15), la deuxième extrémité étant connectée à une deuxième section de ligne de pêche (14), et la première extrémité étant configurée pour être insérée coaxialement dans l'ouverture du connecteur femelle (18), la deuxième extrémité comprenant une pluralité de pétales élastiques (24) dont l'étendue radiale est supérieure à l'étendue radiale du connecteur femelle (18);
insérer le connecteur mâle (16) dans l'ouverture du connecteur femelle (18); et
déplacer les pétales élastiques (24) de la deuxième extrémité du connecteur mâle (16) axialement au-delà de la caractéristique intérieure (52) du connecteur femelle (18), de telle sorte que les pétales élastiques (24) se déforment radialement vers l'intérieur tout en se déplaçant axialement au-delà de la caractéristique intérieure.

14. Procédé selon la revendication 13, dans lequel l'étape de fourniture d'une première section de ligne de pêche (12) connectée à un connecteur femelle (18) comprend l'étape consistant à faire passer une extrémité de la première ligne de pêche (12) à travers un alésage axial (38) dans le connecteur femelle (18) et à faire un noeud à l'extrémité de la première ligne de pêche (12).

15. Procédé selon la revendication 14, comprenant en outre les étapes consistant à:
installer une pluralité des connecteurs femelles (18) sur une carte (72); et
séparer l'un des connecteurs femelles (18) de la carte (72) après le nouage de l'extrémité de la première ligne de pêche (12).

16. Procédé selon la revendication 14, comprenant en outre les étapes consistant à:
installer un flotteur (20) comportant un alésage axial; et
faire passer l'extrémité de la première ligne de pêche (12) à travers l'alésage du flotteur (20) avant de faire passer l'extrémité de la première ligne de pêche (12) à travers l'alésage (38) du connecteur femelle (18).

17. Procédé selon la revendication 13, comprenant en outre les étapes suivantes:
déplacer le connecteur mâle (16) à travers l'ouverture (30) pour séparer le connecteur mâle (16) du connecteur femelle (18);
couper la deuxième ligne de pêche (14) et jeter la deuxième ligne de pêche (14) et le connecteur mâle (16);
installer un deuxième connecteur mâle (16) présentant des première et deuxième extrémités opposées et un axe longitudinal (15), la deuxième extrémité étant connectée à une troisième section de ligne de pêche (14), et la première extrémité étant configurée pour être insérée coaxialement dans l'ouverture du connecteur femelle (18), la deuxième extrémité du connecteur mâle (16) présentant une étendue radiale supérieure à une étendue radiale d'une caractéristique intérieure (52) du connecteur femelle (18);
insérer le deuxième connecteur mâle (16) dans l'ouverture du connecteur femelle (18); et
déplacer l'étendue radiale de la deuxième extrémité du connecteur mâle (16) axialement au-delà de la caractéristique intérieure (52) du connecteur femelle (18).
